Europäisches Patentamt

European Patent Office

Office européen des brevets

(11) Publication number: **0 264 959 B1**

(12) **EUROPEAN PATENT SPECIFICATION**

(45) Date of publication of patent specification: **23.09.92** (51) Int. Cl.5: **C09J 7/02**

(21) Application number: **87115605.5**

(22) Date of filing: **23.10.87**

(54) **Self-adhesive product.**

(30) Priority: **24.10.86 FI 864311**

(43) Date of publication of application:
**27.04.88 Bulletin 88/17**

(45) Publication of the grant of the patent:
**23.09.92 Bulletin 92/39**

(84) Designated Contracting States:
**BE CH DE FR GB IT LI NL SE**

(56) References cited:
**US-A- 3 312 005**

(73) Proprietor: **Yhtyneet Paperitehtaat Oy
Tesomankatu 31
SF-33310 Tampere(FI)**

(72) Inventor: **Pälli, Kari
Simunantie 10 B 17
SF-33880 Sääksjärvi(FI)**
Inventor: **Tirkkonen, Mikko
Satamakatu 4 A 32
SF-33200 Tampere(FI)**
Inventor: **Valonen, Tuomas
Naavankatu 12
SF-33340 Tampere(FI)**

(74) Representative: **Diehl, Hermann Dr. et al
Diehl & Glaeser, Hiltl & Partner Flüggen-
strasse 13
W-8000 München 19(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a self-adhesive product.

There are available at present a number of self-adhesive products designed for various purposes and comprising a surface layer whose back is provided with a pressure sensitive adhesive layer. Prior to the use of such a self-adhesive product, the surface layer and adhesive are set on a release layer which is usually treated with silicon or a like material in a manner that there is a very poor adherence between the release layer and the adhesive layer, the latter being highly adherent to the surface layer. Thus, the surface layer together with the adhesive layer can be removed from a release layer for a fixation purpose followed by pressing it against an object to effect adhesion.

A drawback in the prior known self-adhesive products is that, after removing a surface layer and its associated adhesive layer, the release layer will become an unnecessary piece of waste. The release layer is made of a specially processed material, so its manufacturing costs form a considerable part of the total price of a self-adhesive product. In addition, the handling of such reject, at least when the question is about rather large-size self-adhesive products, leads to considerable handling costs. Also, with the available self-adhesive products, it is not possible to take advantage of all possibilities offered by modern data processing technology, e.g. double printing.

An object of this invention is to provide a novel-type of self-adhesive product capable of eliminating most of the above-discussed problems relating to the prior known self-adhesive products. A self-adhesive product of the invention provides a considerable increase of efficiency, reduction of the amounts of reject, and utilization of modern data processing technology. In order to achieve this objective, a self-adhesive product of the invention is mainly characterized in that said self-adhesive product comprises two opposing surface layers with a release layer and an adhesive layer laid therebetween, that the release layer is made of two components in a manner that a first component of the release layer is formed as a part of the first surface layer and, accordingly, a second component of the release layer as a part of the second surface layer, and that at the first component of said release layer the adhesive layer substantially reaches into the second surface layer and vice versa.

Thus, the above solution provides a self-adhesive product which comprises two fastenable surface layers which face each other and release from each other so that each surface layer will retain its own adhesive layer for fastening, in other words there is no separate release layer that would be rejected after the release of a self-adhesive product. Thus, a self-adhesive product of the invention provides a double efficiency if compared with traditional self-adhesive products. As pointed out in the main characterizing feature of the invention, this is achieved by providing both surface layers on their opposing faces with a release layer consisting of one or several components and by arranging between the components of said release layer an adhesive layer which reaches into the corresponding surface layer. When an adhesive layer is laid between the opposing faces of said surface layers in a manner that, aligned with the adhesive layer fastened to one surface layer, the opposing surface layer carries a release layer and, since an adhesive layer and a release layer can be detached from each other by a very slight force, the detachment of surface layers occurs in a manner that the part of an adhesive layer fastened to a surface layer over the components between a release layer remains attached to that surface layer it is directly connected with. Thus, when released from each other for fastening, the surface layers of a self-adhesive product are fitted with a corresponding section of a release layer and the sections or components therebetween carry the part of an adhesive layer fastened to that particular surface layer.

As for the terminology, it can be said that the surface layer material can be paper, cardboard, plastic film, rather thin plastic-, metal- or cellulose-based sheeting etc. The exposed face of a surface layer can be provided with various information, such as information on a product to which the released surface layer is to be fastened. The exposed face can also be prepared so as to make suitable for writing thereon various pieces of information, such as mailing information, or for printing information thereon with various techniques. In the above cases, the surface layer is generally a layer or laminate transmitting visual information. It is naturally also conceivable that the surface layer has no actual communicating function but, instead, a self-adhesive product is used in joints produced by means of the adhesive layer. On the other hand, the release layer is made of such a material that has good joining characteristics with the surface layer material and correspondingly poor joining characteristics with the adhesive layer. A suitable release layer material can be silicone which contains dimethyl siloxane derivatives. The adhesive layer in turn consists of so-called pressure sensitive adhesive. The material characteristics of pressure sensitive adhesive must be selected so as to give said pressure sensitive adhesive good joining characteristics with the surface layer and, accordingly, poor joining characteristics with the release layer material. In some embodiments of the invention, the adhesive layer material is also required to have a suitable shearing strength for dividing an adhesive layer in two sections. The adhesive layer materials are commercially available and in most cases the pressure sensitive adhesives comprise a composition of various resins, natural rubber and acrylic polymers, such as a pressure sensitive adhesive sold under the trademark AKRONAL .

A self-adhesive product according to the invention can be modified in a plurality of ways within the scope of the principal idea of the invention. Some preferred possible modifications are set forth in the enclosed subclaims.

The invention will now be described in more detail with reference made to the embodiments shown in the accompanying drawings. In the drawings

figs. 1 and 2   illustrate disgrammatically a crosssection of certain embodiments of a self-adhesive product of the invention,

figs. 3 and 4   illustrate disgrammatically certain surface layers of a self-adhesive product in perspective view, and

figs. 5 and 6   illustrate diagrammatically a cross-section of some further embodiments of a self-adhesive product of the invention.

In general terms, the drawings are prepared so as to illustrate the idea of the invention. Thus, the dimensions do not conform with the real ones. For example, when the surface layers are made of paper, the thickness of a composite release and adhesive layer set between the opposing surface layers is generally within the range of 15 to 40 $\mu$m, the components of a release layer having a thickness of circa 1 $\mu$m.

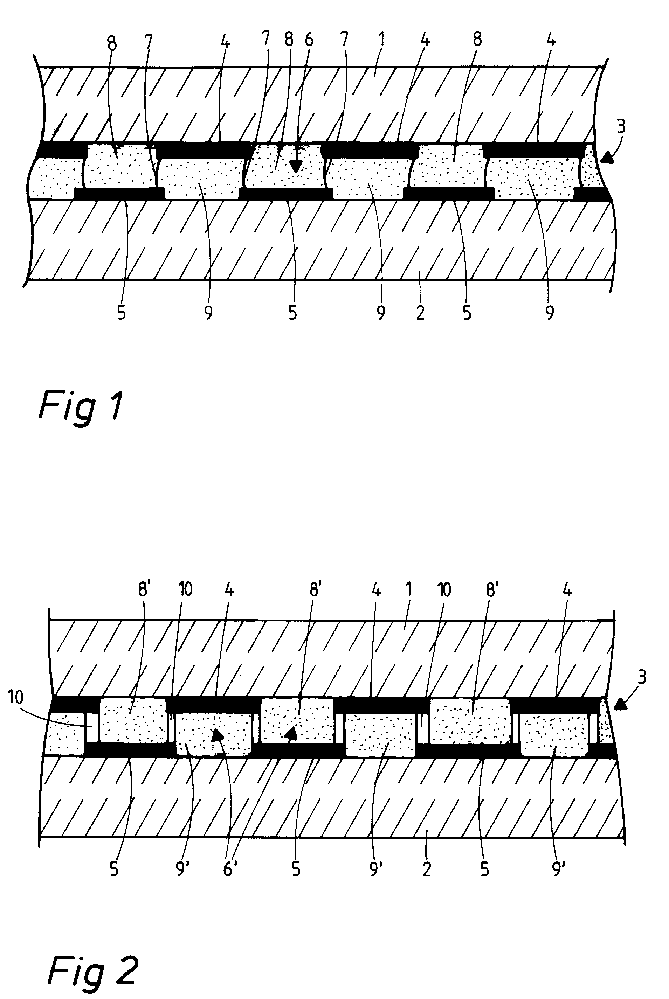

Referring to figs. 1 and 2 of the drawings, a self-adhesive product of the invention comprises a first surface layer 1 and a second surface layer 2. These layers are laid against each other in a manner that therebetween remains a composition 3 formed by a release layer and an adhesive layer. A first release layer component 4 adheres to the first surface layer 1 and a second release layer component 5 similarly to the second surface layer 2. In the embodiment of fig. 1, an adhesive layer 6 fills the space between surface layers 1 and 2 and release layer 4, 5. In fig. 2, on the other hand, an adhesive layer 6 is divided into zones or components 6'.

As illustrated in figs. 1 and 2, an adhesive layer 6 extends between the zones of first release layer component 4 fastened to first surface layer 1 and adheres to the first surface layer. Substantially aligned with the areas where the adhesive layer is in direct contact with first surface layer 1 is the second release layer component 5 on said second surface layer 2, the adhesive layer adhering between the zones of that second component. Since adhesive layer 6 and surface layers 1 and 2 have good adherence to each other and the adherence between the release layer and adhesive layer is poor, upon releasing the surface layers of a self-adhesive product from each other said adhesive layer ruptures as shown with reference numeral 7 in fig. 1, whereby a first component 8 of adhesive layer 6 remains stuck with first surface layer 1 and, correspondingly, a second component 9 of adhesive layer 6 remains with second surface layer 2. As shown in fig. 1, said release layer components 4, 5 are designed in a manner that they are partially aligned with each other in a direction perpendicular to the principal plane of the surface layers in order to make sure that the rupture always occurs between the release layer components. In the embodiment of fig. 2, a similar solution has been obtained by dividing an adhesive layer 6 into clearly defined components by means of spacer webs 10 which are free of adhesive material. Hence, the components 8' of adhesive layer 6 fastened to first surface layer 1 and the adhesive layer component 9' fastened to second surface layer 2 are already mechanically separated from each other in a self-adhesive product.

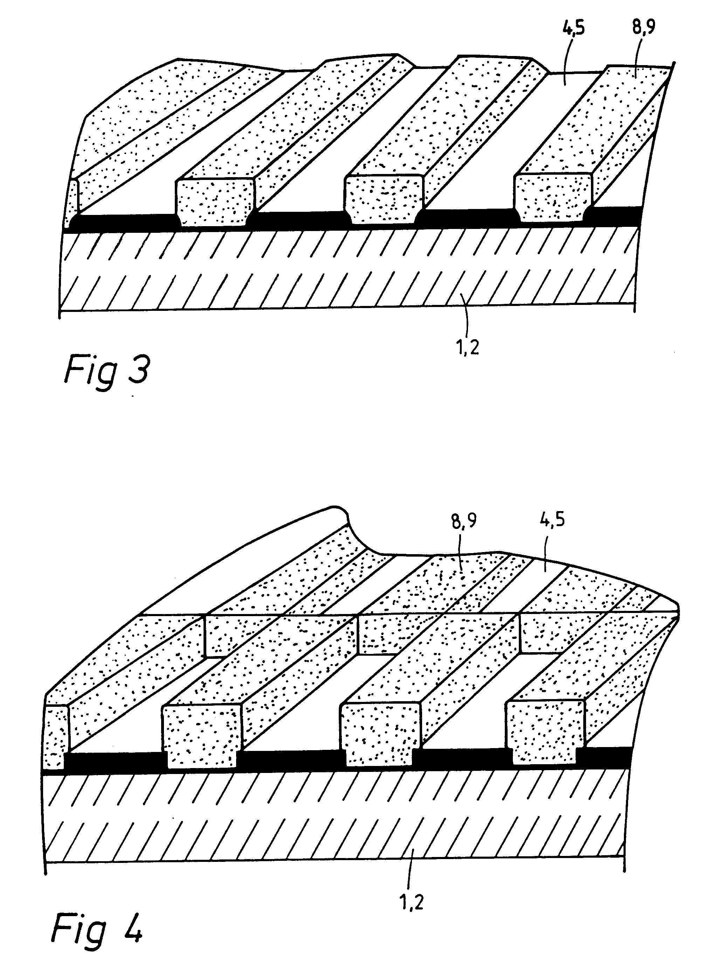

Figs. 3 and 4 illustrate diagrammatically some of the structure of surface layer 1, 2 after releasing it. In the case of fig. 3, a release layer (either first or second component 4, 5) comprises elongated zones, between which the corresponding component 8 or 9 of adhesive layer 6 remains. In a similar manner, fig. 4 illustrates a section of a release layer, comprising rectangular or square components or areas arranged in rows, whereby the components or areas or an adhesive layer are in an overlapping pattern. Similarly, the adhesive layer produces a corresponding pattern.

It is obvious that a considerable number of release layer and adhesive layer embodiments as disclosed in figs. 3 and 4 could be presented within the scope of the basic inventive idea. The adhesive layer components fastening to separated surface layers are in the above embodiments of a substantially identical shape but it is quite as well conceivable, especially if in view of the application of a self-adhesive product different surface layers have different functional requirements, that the shape or configuration of a release layer (and accordingly the shape of an adhesive layer) is different in different surface layers. Generally, the release layer (as well as adhesive layer) components 4, 5 are negative pictures of each other, using a known photographic term. In other words, if the first surface layer, when released, provides a positive, the second surface layer will be a negative and vice versa. All possible modifications are covered by the basic idea of a self-adhesive product of the invention.

The structure shown in fig. 3 is preferred, especially when producing a self-adhesive product from a web-like continuous material. Then, from the point of view of manufacturing technique, it is preferable to provide both surface layers with elongated zones, spaced from each other crosswise of the web-like material. The release layers are fastened to both surface layers and an adhesive layer to either one of the surface layers, followed by joining the surface layers face-to-face. In this case, an adhesive layer can also be prepared as shown in fig. 2, whereby some of the adhesive applied to either surface layer is scraped off for providing spacer webs 10.

The self-adhesive product can be a continuous form, at least whose one side is provided with a perforation zone, the product being intended for double-sided printing, applied to the exposed faces of said surface layers and effected by a printer.

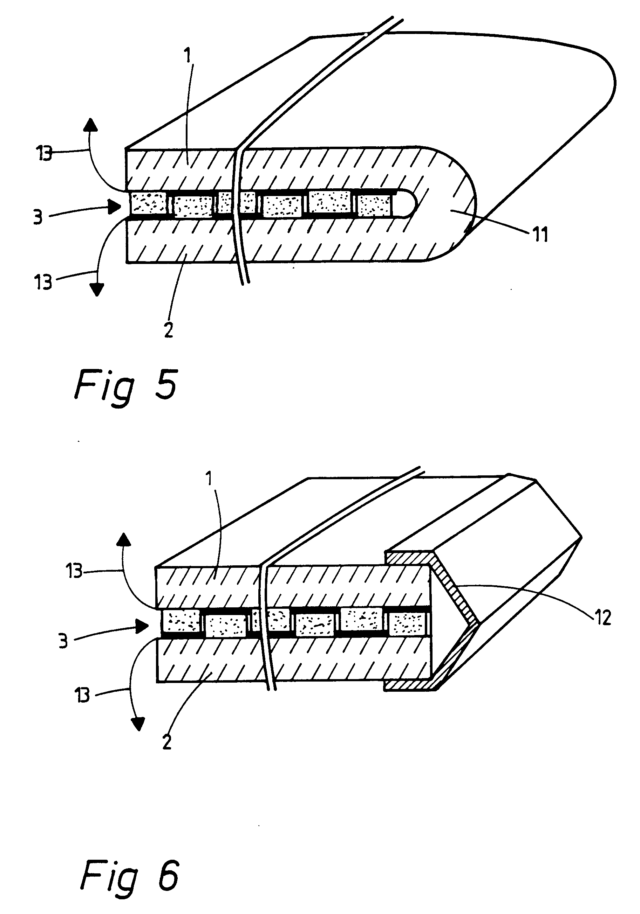

Surface layers 1 and 2 can be made as separate self-adhesive products or, as shown in figs. 5 and 6, the surface layers can be joined at one edge thereof by using a fold 11 (fig. 5) made of the same material as surface layers 1 and 2 or by using a separate joining strip 12 (fig. 6) extending lengthwise of the edges. The surface layers are detached from each other in the direction of arrows 13 at the edge distant from joint (11 or 12) and, when opened, the self-adhesive product takes the form of an integral unit that can be fastened to an object. This solution provides a possibility of producing very large self-adhesive laminates. For example, the use of a fold 11 shown in fig. 5 provides a self-adhesive product whose width equals that of the web and the use of a joining strip 12 shown in fig. 6 provides a self-adhesive product twice as wide as the web.

Particularly in a combination of the embodiments shown in figs. 2 and 3, the width of zones 8′ and 9′ may vary within the range of 5 to 500 mm, said non-adhesive spacer webs 10 having a width of 3 to 10 mm.

The following discloses still possible alternative materials for different layers:
The surface layer can be made of woodfree or pigmented MF-paper, pigmented or coated SC-paper, fluorescent paper, copying paper, protection-coated thermal printing paper, plastic-laminated paper, plastic sheet laminate, plastics or some other synthetic paper.

The adhesive layer can be made of any self-adhesive size or glue (i.e. pressure sensitive adhesive), e.g. dispersion, emulsion (solvent- or water-based adhesive). Possible raw materials in these include various polyacrylates, vinylacetates or compositions thereof.

The adhesive can be characterized as permanent or removable according to its possible applications.

A hot-melt adhesive consists of three components:
1. Block copolymer, such as styrene-butadiene-styrene or styrene-isoprene-styrene
2. Adhesion-promoting resin, such as
   - wood resin, non-stabilized
   - wood resin, stabilized (ester, disproportioned, dimensioned or otherwise stabilized)
   - synthetic hydrocarbon resins
3. Softener, such as
   - oil
   - phtalate
   - liquid, stabilized wood or hydrocarbon resin

A release layer which prior to application can be in the form of either a dispersion, emulsion or composition with 100 % dry matter. Recommended qualities include silicones and modified silicones. Modified silicones may refer either to the copolymerization of silicones with other, non-removable agents or they can be prepared by the addition of non-silicone substances into a silicone solution prior to the application on a surface layer. Other removable agents that can be used include polyethylene, fluorocarbon, a werner-type chromium complex and polyvinyl octadecylcarbonate.

**Claims**

1. A self-adhesive product comprising two opposing surface layers (1,2) with a release layer (4,5) and adhesive layer (6) laid therebetween, wherein said release layer (4,5) consists of two components in a manner that a first release layer component (4) is formed as a part of first surface layer (1) and a second release layer component (5) the same way as a part of second surface layer (2),
   **characeterized** in that the first (4) and second (5) release layer components are partly aligned with each other in a direction perpendicular to the principal plane of the surface layers and wherein, at said first release layer component (4), said adhesive layer (6) substantially reaches into said second surface layer (2) and vice versa, thereby providing a separation zone (7,10) extending substantially between said aligned first (4) and second (5) release layers and substantially perpendicular to the principal plane of said surface layers (1,2).

2. A self-adhesive product as set forth in claim 1, **characterized** in that said adhesive layer (6) is divided into sections by means of spacer webs (10), which are free of adhesive material and so positioned that said adhesive layer (6) is divided into a component (8') attached to the first surface layer and a component (9') attached to second surface layer (2).

3. A self-adhesive product as set forth in one of the preceding claims, **characterized** in that said release layer components (4, 5) are substantially negative patterns of each other.

4. A self-adhesive product as set forth in one of the preceding claims, **characterized** in that a release layer component (4, 5) consists of substantially identically shaped components or zones.

5. A self-adhesive product as set forth in one of the preceding claims, **characterized** in that said release layer components (4, 5) are substantially of the same shape in both surface layers.

6. A self-adhesive product as set forth in one of the preceding claims, **characterized** in that the release layer comprises adjacent, elongated zones in both surface layers, whereby said adhesive layer (6) is adapted to adhere to surface layer (1, 2) over the areas between said zones.

7. A self-adhesive product as set forth in claims 1 to 5, **characterized** in that said release layer (4, 5) and adhesive layer (6, 8) have rectangular and square sections or areas, arranged in rows in a manner that said sections or areas in release layer (4, 5) and adhesive layer (6, 8) are alternating in each row and that successive rows, at each section or area of release layer (4, 5), are provided with a section or area of adhesive layer (6, 8) and vice versa.

8. A self-adhesive product as set forth in one of the preceding claims, **characterized** in that said self-adhesive product is in the form of a web.

9. A self-adhesive product as set forth in one of the preceding claims, **characterized** in that said self-adhesive product is an endless continuous form, at least whose one side is provided with a perforation zone, the product being intended for double-sided printing, applied to the exposed faces of said surface layers and effected by means of a printer.

10. A self-adhesive product as set forth in one of the preceding claims, **characterized** in that said surface layers (1, 2) comprise independent products that are completely removable from each other.

11. A self-adhesive product as set forth in one of the preceding claims, **characterized** in that said surface layers (1, 2) are joined together at one edge of said self-adhesive product.

12. A self-adhesive product as set forth in claim 11, **characterized** in that said joint is a fold (11) which is formed between surface layers (1, 2).

13. A self-adhesive product as set forth in claim 11, **characterized** in that said joint is formed by using a separate joining strip (12) which seals the edges of surface layers (1, 2).

**Patentansprüche**

1. Selbsthaftender Gegenstand, der zwei gegenüberliegende Oberflächenschichten (1,2) mit einer Freigabeschicht (4,5) und einer Haftschicht (6), die dazwischen angeordnet sind, aufweist, wobei die Freigabeschicht (4,5) in einer Weise aus zwei Bestandteilen besteht, daß ein erster Freigabeschichtbestandteil (4) als Teil der ersten Oberflächenschicht (1) und ein zweiter Freigabeschichtbestandteil (5) in gleicher Weise als Teil der zweiten Oberflächenschicht (2) ausgebildet ist, **dadurch gekennzeichnet,** daß der erste (4) und zweite (5) Freigabeschichtbestandteil teilweise untereinander in einer Richtung ausgerichtet sind, die senkrecht zu der Hauptebene der Oberflächenschichten ist, und wobei an dem ersten Freigabeschichtbestandteil (4) die Haftschicht (6) im wesentlichen in die zweite Oberflächenschicht (2) und umgekehrt hineinragt, wodurch eine Trennzone (7,10) ausgebildet wird, die sich im wesentlichen zwischen der ausgerichteten ersten (4) und zweiten (5) Freigabeschicht und im wesentlichen senkrecht zur Hauptebene der Oberflächenschichten (1,2) erstreckt.

2. Selbsthaftender Gegenstand nach Anspruch 1, **dadurch gekennzeichnet,** daß die Haftschicht (6) mittels kein Haftmaterial aufweisenden und so angeordneten Abstandsrippen (10) in Abschnitte unterteilt ist, daß die Haftschicht (6) in einen an der ersten Oberflächenschicht angeordneten Bestandteil (8') und einen an der zweiten Oberflächenschicht (2) angeordneten Bestandteil (9') geteilt ist.

3. Selbsthaftender Gegenstand nach einem der vorhergehenden Ansprüche, **dadurch gekennzeichnet,** daß die Freigabeschichtbestandteile (4,5) im wesentlichen negative Muster voneinander sind.

4. Selbsthaftender Gegenstand nach einem der vorhergehenden Ansprüche, **dadurch gekennzeichnet,** daß ein Freigabeschichtbestandteil (4,5) im wesentlichen aus identisch geformten Bestandteilen oder Zonen besteht.

5. Selbsthaftender Gegenstand nach einem der vorhergehenden Ansprüche, **dadurch gekennzeichnet,** daß die Freigabeschichtbestandteile (4,5) in beiden Oberflächenschichten die gleiche Form aufweisen.

6. Selbsthaftender Gegenstand nach einem der vorhergehenden Ansprüche, **dadurch gekennzeichnet,** daß die Freigabeschicht in beiden Oberflächenschichten aneinandergrenzende, verlängerte Zonen aufweist, wobei die Haftschicht (6) so ausgebildet ist, daß sie über die Flächen zwischen den Zonen an der Oberflächenschicht (1,2) haftet.

7. Selbsthaftender Gegenstand nach einem der Ansprüche 1 bis 5, **dadurch gekennzeichnet,** daß die Freigabeschicht (4,5) und die Haftschicht (6,8) rechteckige und quadratische Abschnitte oder Flächen aufweisen, die in einer Weise in Reihen angeordnet sind, daß die Abschnitte oder Flächen in der Freigabeschicht (4,5) und Haftschicht (6,8) in jeder Reihe alternieren und daß aufeinanderfolgende Reihen an jedem Abschnitt oder an jeder Fläche der Freigabeschicht (4,5) mit einem Abschnitt oder einer Fläche der Haftschicht (6,8) versehen sind und umgekehrt.

8. Selbsthaftender Gegenstand nach einem der vorhergehenden Ansprüche, **dadurch gekennzeichnet,** daß der selbsthaftende Gegenstand die Form eines Gewebes aufweist.

9. Selbsthaftender Gegenstand nach einem der vorhergehenden Ansprüche, **dadurch gekennzeichnet,** daß der selbsthaftende Gegenstand eine endlose, ununterbrochene Form aufweist, deren wenigstens eine Seite mit einer Perforationszone versehen ist, wobei der Gegenstand für doppelseitiges Bedrucken vorgesehen ist, das auf die ausgesetzte Seite der Oberflächenschichten mittels eines Druckers aufgebracht wird.

10. Selbsthaftender Gegenstand nach einem der vorhergehenden Ansprüche, **dadurch gekennzeichnet,** daß die Oberflächenschichten (1,2) unabhängige Produkte aufweisen, die vollständig voneinander entfernbar sind.

11. Selbsthaftender Gegenstand nach einem der vorhergehenden Ansprüche, **dadurch gekennzeichnet,** daß die Oberflächenschichten (1,2) an einer Kante des selbsthaftenden Gegenstandes miteinander verbunden sind.

12. Selbsthaftender Gegenstand nach Anspruch 11, **dadurch gekennzeichnet,** daß die Verbindungsstelle eine zwischen den Oberflächenschichten (1,2) ausgebildete Falte (11) ist.

13. Selbsthaftender Gegenstand nach Anspruch 11, **dadurch gekennzeichnet,** daß die Verbindungsstelle unter Verwendung eines separaten Verbindungsstreifens (12), welcher die Kanten der Oberflächenschichten (1,2) abdichtet, ausgebildet ist.

**Revendications**

1. Produit adhésif comprenant deux couches opposées de surface (1, 2) ayant entre elles une couche anti-adhésive (4, 5) et une couche adhésive (6), la couche antiadhésive (4, 5) étant constituée de deux éléments de manière qu'un premier élément (4) de couche anti-adhésive fasse partie d'une première couche de surface (1) et un second élément (5) de couche anti-adhésive fasse partie d'une seconde couche de surface (2),
   caractérisé en ce que le premier (4) et le second (5) élément de couche anti-adhésive sont partiellement alignés mutuellement en direction perpendiculaire au plan principal des couches de surface, et, au niveau du premier élément de couche anti-adhésive (4), la couche adhésive (6) atteint pratiquement la seconde couche de surface (2) et inversement, si bien qu'une zone de séparation (7, 10) est formée pratiquement entre la première (4) et la seconde (5) couche anti-adhésive qui sont alignées en direction sensiblement perpendiculaire au plan principal des couches de surface (1, 2).

2. Produit adhésif selon la revendication 1, caractérisé en ce que la couche adhésive (6) est divisée en tronçons par des joues d'entretoise (10) qui ne comportent pas de matières adhésives et qui sont disposées afin que la couche adhésive (6) soit divisée en un élément (8') fixé à la première couche de surface et un élément (9') fixé à la seconde couche de surface (2).

3. Produit adhésif selon l'une des revendications précédentes, caractérisé en ce que les éléments (4, 5) de couche anti-adhésive sont pratiquement des dessins négatifs l'un de l'autre.

4. Produit adhésif selon l'une des revendications précédentes, caractérisé en ce qu'un élément (4, 5) de couche anti-adhésive est formé de zones ou éléments de formes pratiquement identiques.

5. Produit adhésif selon l'une des revendications précédentes, caractérisé en ce que les éléments (4, 5) de couche anti-adhésive ont pratiquement la même forme dans les deux couches de surface.

6. Produit adhésif selon l'une des revendications précédentes, caractérisé en ce que la couche anti-adhésive comprend des zones allongées adjacentes dans les deux couches de surface, si bien que la couche adhésive (6) est destinée à adhérer à la couche de surface (1, 2) dans les régions comprises entre les zones.

7. Produit adhésif selon l'une des revendications 1 à 5, caractérisé en ce que la couche anti-adhésive (4, 5) et la couche adhésive (6, 8) ont des tronçons ou régions rectangulaires ou carrés, disposés en lignes de manière que les tronçons ou régions de la couche anti-adhésive (4, 5) et de la couche adhésive (6, 8) alternent dans chaque ligne et que les lignes successives, à chaque tronçon ou région de couche anti-adhésive (4, 5), comportent un tronçon ou région de couche adhésive (6, 8) et vice versa.

8. Produit adhésif selon l'une des revendications précédentes, caractérisé en ce que le produit adhésif est sous forme d'une feuille continue.

9. Produit adhésif selon l'une des revendications précédentes, caractérisé en ce que le produit adhésif a une forme continue sans fin dont un côté au moins a une zone de perforations, le produit étant destiné à permettre une impression sur les deux faces, appliquée sur les faces exposées des couches de surface et réalisée par une imprimante.

10. Produit adhésif selon l'une des revendications précédentes, caractérisé en ce que les couches de surface (1, 2) sont des produits indépendants qui sont totalement séparables l'une de l'autre.

11. Produit adhésif selon l'une des revendications précédentes, caractérisé en ce que les couches de surface (1, 2) sont raccordées à un bord du produit adhésif.

12. Produit adhésif selon la revendication 11, caractérisé en ce que le raccord est un pli (11) formé entre les couches de surface (1, 2).

13. Produit adhésif selon la revendication 11, caractérisé en ce que le raccord est formé par utilisation d'une bande séparée (12) de raccordement qui est collée aux bords des couches de surface (1, 2).

Fig 1

Fig 2

EP 0 264 959 B1

4,5    8,9

1,2

Fig 3

8,9    4,5

1,2

Fig 4

9

*Fig 5*

*Fig 6*